**Europäisches Patentamt**

**European Patent Office**

**Office européen des brevets**

(19)

(11) Veröffentlichungsnummer: **0 207 048**
**B1**

# EUROPÄISCHE PATENTSCHRIFT

(12)

(45) Veröffentlichungstag der Patentschrift:
25.01.89

(21) Anmeldenummer: **86890057.2**

(22) Anmeldetag: **12.03.86**

(51) Int. Cl.⁴: **F 27 B 1/20,** F 27 B 1/04, C 04 B 2/12

(54) **Beschickungsvorrichtung für einen Schachtofen zum Brennen von karbonathaltigem, mineralischem Brenngut.**

(30) Priorität: **10.05.85 AT 1411/85**

(43) Veröffentlichungstag der Anmeldung:
**30.12.86 Patentblatt 86/52**

(45) Bekanntmachung des Hinweises auf die Patenterteilung:
**25.01.89 Patentblatt 89/4**

(84) Benannte Vertragsstaaten:
**BE CH DE FR GB IT LI LU NL SE**

(56) Entgegenhaltungen:
AT-A-377 078
DE-A-1 902 327
FR-A-1 367 391

(73) Patentinhaber: **VOEST- ALPINE INDUSTRIEANLAGENBAU GESELLSCHAFT M.B.H., Turmstrasse 44, A-4020 Linz (AT)**

(72) Erfinder: **Nagl, Michael, Dipl.- Ing., Nöstlbach 91, A-4502 St. Marien (AT)**
Erfinder: **Fugger, Gerhard, Anger 26, A-4201 Gramastetten (AT)**
Erfinder: **Mraz, Jaroslav, Am Sportplatz 4, A-4501 Neuhofen/Krems (AT)**
Erfinder: **Mailänder, Horst, Dipl.- Ing., J.- W. Kleinstrasse 36, A-4040 Linz (AT)**
Erfinder: **Rottenmanner, Ernst, Robert Stolz Strasse 3, A-4020 Linz (AT)**
Erfinder: **Rauber, Norbert, Dipl.- Ing., Karl Rennerstrasse 3, A-4040 Linz (AT)**
Erfinder: **Luger, Wolfgang, Preinsbacherstrasse 90, A-3300 Amstetten (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

## Beschreibung

Die Erfindung bezieht sich auf eine Beschickungsvorrichtung für einen Schachtofen zum Brennen von karbonathaltigem, mineralischem Brenngut in wenigstens zwei Schächten, bestehend aus einem gemeinsamen Beschickungsbehälter, der über je eine Aufgabeleitung an die Schächte angeschlossen ist.

Bei einer bekannten Vorrichtung dieser Art (AT-PS-377 078) sind zwischen dem gemeinsamen Beschickungsbehälter und den abwechselnd mit Brenngut beschickbaren Schächten des Schachtofens Förderrohre vorgesehen, durch die das Brenngut aus dem Beschickungsbehälter dem jeweiligen Schacht zugeführt wird. Da diesem Behälter eine Dosiereinrichtung zugeordnet ist, die die Beschickung mit einer vorgegebenen Brenngutmenge sicherstellt, weist eine solche Vorrichtung gegenüber Beschickungsanlagen mit je einem Beschickungsbehälter für jeden Schacht den Vorteil auf, daß alle Schächte in einfacher Weise mit gleichen Gutmengen beschickt werden, weil sich nicht zufolge gesonderter Dosiereinrichtungen für jeden Schacht unterschiedliche Bemessungen ergeben können. Außerdem kann der Konstruktionsaufwand entsprechend gering gehalten werden. Trotz dieser Vorteile bleibt jedoch der Nachteil bestehen, daß wegen der Forderung nach einem gasdichten Schachtabschluß zwischen dem gemeinsamen Beschickungsbehälter und den einzelnen Schächten Druckschleusen vorgesehen werden müssen, die die notwendige Bauhöhe vergrößern. Diese Druckschleusen bestehen beispielsweise aus einer Verschlußklappe für die einzelnen Schächte und aus diesen Verschlußklappen nachgeordneten Glockenverschlüssen. Zur Beschickung eines Schachtes muß folglich die dem Beschickungsbehälter aufgegebene, dosierte Brenngutmenge über das zugehörige Förderrohr bei geöffneter Verschlußklappe in den Schachtraum zwischen Verschlußklappe und Glockenverschluß eingebracht werden, bevor nach einem Schließen der Verschlußklappe der Glockenverschluß geöffnet werden kann. Da das Brenngut auf der Verschlußglocke des Glockenverschlusses aufruht, wird die Dichtfläche durch das Brenngut beaufschlagt, was ungünstige Belastungsverhältnisse mit sich bringt.

Der Erfindung liegt somit die Aufgabe zugrunde, diese Mängel zu vermeiden und eine Beschickungsvorrichtung der eingangs geschilderten Art so zu verbessern, daß unter Sicherstellung eines einfachen, gasdichten Schachtabschlusses die notwendige Bauhöhe für die Beschickungsvorrichtung herabgesetzt werden kann.

Die Erfindung löst die gestellte Aufgabe dadurch, daß der Beschickungsbehälter als Schleusenkammer mit je einem Schleusenverschluß für die Einlaßöffnung des Beschickungsbehälters und für die Anschlußöffnungen der Aufgabeleitungen ausgebildet ist.

Durch die Ausbildung des Beschickungsbehälters selbst als Schleusenkammer entfällt die Notwendigkeit dem Beschickungsbehälter eine Schleusenkammer nachzuordnen, so daß die Bauhöhe der Beschickungsvorrichtung um die Höhe üblicher Schleusenkammern verringert werden kann. Die Verwendung des Beschickungsbehälters als Schleusenkammer bringt jedoch nicht nur einen Gewinn an Bauhöhe, sondern auch eine Konstruktionsvereinfachung mit sich, weil nicht jedem Schacht eine gesonderte Schleusenkammer zugeordnet werden muß. Da zur Beschickung eines Schachtes mit der in den Beschickungsbehälter eingebrachten, dosierten Brenngutmenge lediglich der Schleusenverschluß für die Anschlußöffnung der Aufgabeleitung geöffnet werden muß, um das Gut über die Aufgabeleitung in den Schacht eintragen zu können, ergibt sich außerdem der Vorteil einer vereinfachten Steuerung.

Bestehen die Schleusenverschlüsse in weiterer Ausbildung der Erfindung aus je einer an der Austrittsseite der Einlaß- bzw. der Anschlußöffnung vorgesehenen Verschlußklappe, die in der Schließstellung einen vorragenden Randkragen der Einlaß- bzw. der Anschlußöffnung mit einem Dichtungskragen übergreift, so kann mit einfachen Mitteln eine Beaufschlagung der Dichtungsflächen durch das Brenngut vermieden werden. Die Dichtungsflächen befinden sich ja außerhalb des Randkragens, der gegen die Verschlußklappe vorsteht und ein Vordringen des Brenngutes zu den Dichtungsflächen verhindert. Es kann folglich mit hohen Standzeiten gerechnet werden.

Um in einfacher Weise zum Öffnen der Verschlußklappe einen Druckausgleich herstellen zu können, können schließlich die Verschlußklappen über Schwenkarme öffenbar sein, die an den Verschlußklappen in Schwenkrichtung anschlagbegrenzt verschiebbar angreifen und ein Druckausgleichsventil in der Verschlußklappe betätigen. Da die Schwenkarme gegenüber den Verschlußklappen anschlagbegrenzt verschiebbar sind, kann der dadurch bedingte Leerhub der Schwenkarme zum Betätigen eines in der Verschlußklappe vorgesehenen Druckausgleichsventiles ausgenützt werden. Wird somit der Schwenkarm aus der Schließstellung im Öffnungssinn verdreht, so wird über den Schwenkarm zunächst das Druckausgleichsventil geöffnet, bevor nach dem Überwinden des Leerhubes der Schwenkarm an der Verschlußklappe angreifen und diese öffnen kann. Mit dem zwangsläufigen Betätigen des Druckausgleichsventiles vor dem Öffnen eines Schleusenverschlusses werden somit sehr geringe Betätigungskräfte notwendig.

In der Zeichnung ist der Erfindungsgegenstand beispielsweise dargestellt. Es zeigen

Fig. 1 eine erfindungsgemäße Beschickungsvorrichtung für einen Zweischachtofen in einer schematischen Vorderansicht,

Fig. 2 den Schleusenverschluß im Bereich der Einlaßöffnung des Beschickungsbehälters in einem vereinfachten Schnitt in einem größeren Maßstab und

Fig. 3 einen Schnitt durch die Schleusenverschlüsse für die Anschlußöffnungen der Aufgabeleitungen ebenfalls in einem größeren Maßstab.

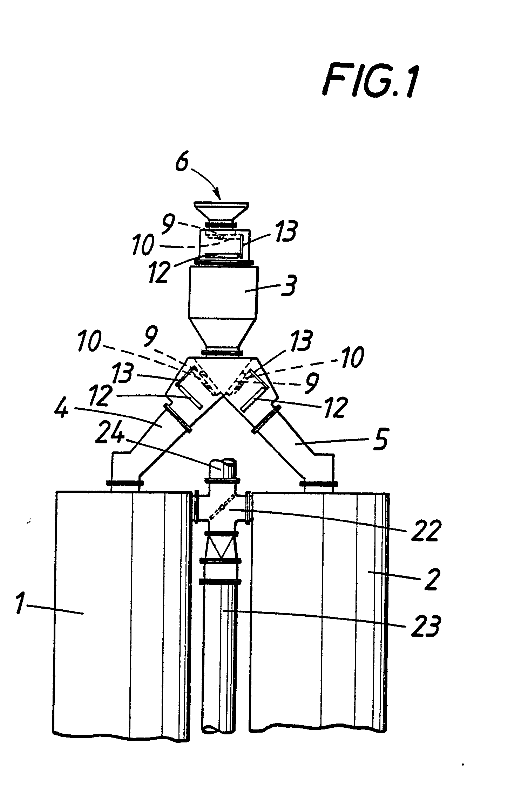

Die Beschickungsvorrichtung nach Fig. 1 für die beiden Schächte 1 und 2 eines Zweischachtofens besteht im wesentlichen aus einem Beschickungsbehälter 3, der über zwei Aufgabeleitungen 4 und 5 an die Schächte 1 und 2 angeschlossen ist. Das dosiert in den Beschickungsbehälter 3 eingebrachte Brenngut kann daher abwechselnd den Schächten 1 und 2 zugeführt werden. Zur Beschickung des Behälters 3 dient ein aus übersichtlichkeitsgründen nicht dargestellter Förderer, der das Brenngut über eine Einlaßöffnung 6 in den Beschickungsbehälter abwirft.

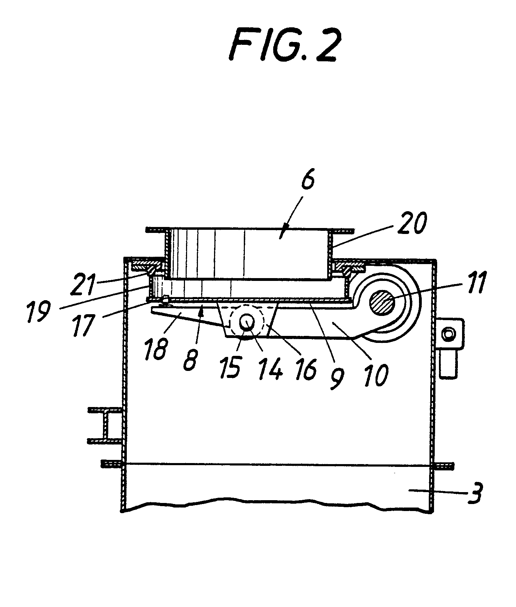

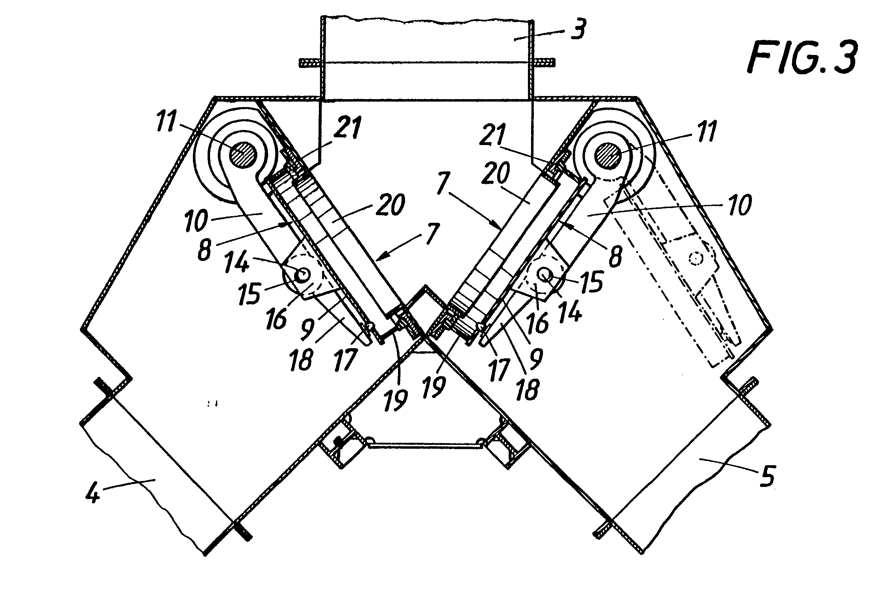

Zum Unterschied von bekannten Beschickungsvorrichtungen ist der Beschickungsbehälter 3 als Schleusenkammer ausgebildet, wobei im Bereich der Einlaßöffnung 6 des Beschickungsbehälters und im Bereich der Anschlußöffnungen 7 für die Aufgabeleitungen 4 und 5 Schleusenverschlüsse 8 vorgesehen sind. Diese Schleusenverschlüsse bestehen gemäß dem Ausführungsbeispiel nach den Fig. 2 und 3 aus je einer Verschlußklappe 9, an die ein Schwenkhebel 10 angreift. Dieser Schwenkhebel sitzt auf einer Betätigungswelle 11, die mittels eines Arbeitszylinders 12 über einen Stellhebel 13 verdreht werden kann, wie dies in Fig. 1 angedeutet ist. Die Anordnung ist dabei so getroffen, daß der Schwenkarm 10 mit einem Lagerbolzen 14 in ein Langloch 15 eines Lagerbockes 16 auf der Verschlußklappe 9 eingreift, so daß bei einer Drehverstellung des Schwenkarmes 10 über die Betätigungswelle 11 der Schwenkarm 10 einen Leerhub im Ausmaß des durch das Langloch 15 gegebenen Spieles ausführt, bevor die Verschlußklappe 9 geöffnet werden kann. Dieser Leerhub wird zum Betätigen eines Druckausgleichsventiles 17 ausgenützt, das in der Verschlußklappe 9 vorgesehen ist und über einen Verlängerungshebel 18 des Schwenkarmes 10 geöffnet werden kann.

Wie aus den Fig. 2 und 3 erkennbar ist, ist zu diesem Zweck der Ventilkörper mit dem Verlängerungshebel 18 des Schwenkarmes 10 verbunden.

Soll beispielsweise der Schleusenverschluß 8 für die Anschlußöffnung 7 der Aufgabeleitung 5 geöffnet werden, so wird der Schwenkarm 10 über den zugehörigen Arbeitszylinder 12, den Stellhebel 13 und die Betätigungswelle 11 beaufschlagt, wobei in einem ersten Abschnitt das Druckausgleichsventil 17 geöffnet wird, so daß sich zwischen dem Beschickungsbehälter 3 und dem Schacht 2 ein Druckausgleich einstellen kann. Danach wird in einem zweiten Abschnitt die Verschlußklappe 9 geöffnet. In Fig. 3 ist die Öffnungsstellung strichpunktiert angedeutet. Nach dem Öffnen der Verschlußklappe kann das Brenngut aus dem Beschickungsbehälter 3 durch die Aufgabeleitung 5 unbehindert in den Schacht 2 gelangen. Daß dabei die Schleusenverschlüsse im Bereich der Einlaßöffnung 6 des Beschickungsbehälters 3 und im Bereich der Anschlußöffnung 7 für die Aufgabeleitung 4 zum Schacht 1 geschlossen sein müssen braucht wohl nicht näher ausgeführt zu werden. Beim Schließen der Verschlußklappe 9 wird der Bewegungsablauf gegensinnig durchlaufen. Nach dem Schließen der Verschlußklappe wird über den Verlängerungshebel 18 das Druckausgleichsventil 17 geschlossen, so daß wieder ein gasdichter Verschluß für den Schacht gewährleistet ist.

Um besonders vorteilhafte Dichtungsverhältnisse im Bereich der Schleusenverschlüsse sicherzustellen, weisen die an der Austrittsseite der jeweiligen Öffnung 6 bzw. 7 vorgesehenen Verschlußklappen 9 einen Dichtungskragen 19 auf, mit dem sie einen Randkragen 20 der Einlaßöffnung 6 bzw. der Anschlußöffnung 7 übergreifen. Da der Randkragen 20 gegen die Verschlußklappe 9 hin vorragt und vom Dichtungskragen 19 der Verschlußklappe 9 übergriffen wird, kommen die Dichtungen 21 für die Verschlußklappen 9 mit dem Brenngut nicht in Berührung, was sich vorteilhaft auf die Standzeit auswirkt.

Wie sich aus Fig. 1 schematisch erkennen läßt, können die Schächte 1 und 2 über eine Umschalteinrichtung 22 abwechselnd mit einer Frischluftleitung 23 und einer Abgasleitung 24 verbunden werden, so daß die Brenngase aus dem mit dem Frischluftkanal 23 verbundenen Schacht, beispielsweise dem Schacht 1, über einen nicht dargestellten Überströmkanal in den anderen Schacht 2 gelangen und dort das Brenngut im Gegenstrom vorwärmen können bevor sie aus diesem Schacht 2 über die Abgasleitung 24 entweichen. Nach dem Umstellen der Umschalteinrichtung 22 wird dem vorher im Gegenstrom mit den Verbrennungsgasen aus dem anderen Schacht 1 erwärmten Schacht 2 Brennstoff und Frischluft zugeführt, wobei die Brenngase im Gleichstrom mit dem Brenngut durch den Schacht 2 geleitet werden, um nunmehr das Brenngut im anderen Schacht 1 im Gegenstrom aufzuwärmen. Die Beschickung der beiden Schächte mit Brenngut kann dabei wahlweise während des Gegenstrombetriebes oder während des Gleichstrombetriebes erfolgen.

**Patentansprüche**

1. Beschickungsvorrichtung für einen Schachtofen zum Brennen von karbonathaltigem, mineralischem Brenngut in wenigstens zwei Schächten (1, 2), bestehend aus einem gemeinsamen Beschickungsbehälter (3), der über je eine Aufgabeleitung (4, 5) an die Schächte (1, 2) angeschlossen ist, dadurch gekennzeichnet, daß der Beschickungsbehälter (3) als Schleusenkammer mit je einem Schleusenverschluß (8) für die Einlaßöffnung (6) des Beschickungsbehälters (3) und für die Anschlußöffnungen (7) der Aufgabeleitungen (4, 5) ausgebildet ist.

2. Beschickungsvorrichtung nach Anspruch 1, dadurch gekennzeichnet, daß die Schleusenverschlüsse (8) aus je einer an der Austrittsseite der Einlaß- bzw. der Anschlußöffnung (6, 7) vorgesehenen Verschlußklappe (9) bestehen, die in der Schließstellung einen vorragenden Randkragen (20) der Einlaß- bzw. der Anschlußöffnung (6 bzw. 7) mit einem Dichtungskragen (19) übergreift.

3. Beschickungsvorrichtung nach den Ansprüchen 1 und 2, dadurch gekennzeichnet, daß die Verschlußklappen (9) über Schwenkarme (10) öffenbar sind, die an den Verschlußklappen (9) in Schwenkrichtung anschlagbegrenzt verschiebbar angreifen und ein Druckausgleichsventil (17) in der Verschlußklappe (9) betätigen.

**Claims**

1. An apparatus for charging a shaft furnace for burning carbonate-containing mineral material in at least two shafts (1, 2) consisting of a common charge container (3), which is connected to the shafts (1, 2) by respective feed lines (4, 5), characterized in that the charge container (3) constitutes a lock chamber and is provided with respective shutters (8) for the inlet opening (6) of the charge container (3) and for the ports (7) connected to the feed lines (4, 5).

2. A charging apparatus according to claim 1, characterized in that each of the shutters (8) consists of a shutter flap (9), which is provided on the exit side of the inlet opening or of the port (6, 7) and has a sealing collar (19) which in the closed position of the shutter flap surrounds a protruding rim collar (20) of the inlet opening or port (6 or 7).

3. A charging apparatus according to claims 1 and 2, characterized in that the shutter flaps (9) are adapted to be opened by means of pivoted arms (10), which slidably engage the shutter flaps (9) for a stop-limited movement in the direction of the pivotal movement, and actuate a vent valve (17) in the shutter flap (9).

**Revendications**

1. Dispositif de chargement pour un four droit destiné à brûler une matière combustible minérale contenant du carbonate, dans au moins deux cuves (1, 2), composé d'un récipient de chargement commun (3) qui est raccordé, à chacune des cuves (1, 2), par une conduite d'alimentation (4, 5), caractérisé par le fait que le récipient de chargement (3) constitue une chambre de sas comprenant un obturateur de sas (8) pour chacune des ouvertures, l'ouverture d'entrée (6) du récipient de chargement (3), et pour les ouvertures de raccordement (7) des conduites d'alimentation (4, 5).

2. Dispositif de chargement selon la revendication 1, caractérisé par le fait que les obturateurs de sas (8) sont composés chacun d'un volet obturateur (9) prévu sur le côté sortie de l'ouverture d'entrée ou de raccordement (6, 7) et qui, dans la position de fermeture, emboîte par un collet d'étanchéité, un collet marginal saillant (20) de l'ouverture d'entrée ou de raccordement (6, 7).

3. Dispositif de chargement selon les revendications 1 et 2, caractérisé par le fait que les volets obturateurs (9) peuvent s'ouvrir au moyen de bras oscillants (10) qui sont accouplés aux volets obturateurs (9) avec une liberté de coulissement limitée par des butées dans la direction de l'oscillation, et qui actionnent une soupape d'équilibrage des pressions (17) prévue dans le volet obturateur (9).

# FIG.1

# FIG. 2

FIG.3